Europäisches Patentamt

European Patent Office

Office européen des brevets

(11) Numéro de publication : **0 508 905 B1**

(12) **FASCICULE DE BREVET EUROPEEN**

(45) Date de publication du fascicule du brevet :
**18.10.95 Bulletin 95/42**

(51) Int. Cl.⁶ : **G01S 11/12, F41G 7/22**

(21) Numéro de dépôt : **92401015.0**

(22) Date de dépôt : **10.04.92**

(54) **Procédé d'autoguidage d'un engin vers une cible par mesure de distance.**

(30) Priorité : **11.04.91 FR 9104407**

(43) Date de publication de la demande :
**14.10.92 Bulletin 92/42**

(45) Mention de la délivrance du brevet :
**18.10.95 Bulletin 95/42**

(84) Etats contractants désignés :
**DE FR GB IT**

(56) Documents cités :
**EP-A- 0 112 021
EP-A- 0 167 432
EP-A- 0 297 665
FR-A- 2 537 263
GB-A- 1 539 581
US-A- 4 872 051
US-A- 4 969 735
US-A- 4 987 357**

(73) Titulaire : **SAT (Société Anonyme de
Télécommunications)
6, avenue d'Iéna
F-75116 Paris (FR)**

(72) Inventeur : **Boudoux d'Hautefeuille, Marie
58 B, rue du Dessous-des-Berges
F-75625 Paris Cédex 13 (FR)**
Inventeur : **Lemagnen, Jean-Pierre
58 B, rue du Dessous-des-Berges
F-75625 Paris Cédex 13 (FR)**

(74) Mandataire : **Cabinet Martinet & Lapoux
BP 405
F-78055 Saint Quentin en Yvelines Cédex (FR)**

## Description

L'invention concerne de manière générale le guidage d'un engin vers une cible par changement de trajectoire de l'engin en vue d'atteindre la cible par localisation de celle-ci.

Dans un tel autoguidage, l'engin doit, compte tenu d'un certain nombre de paramètres, être en mesure de localiser la cible et d'effectuer un changement de direction pour s'orienter vers celle-ci dans le but de l'atteindre. L'un des paramètres essentiels, nécessaire à la localisation de la cible, est la distance séparant l'engin de la cible.

La EP-A-0 112 021 décrit un dispositif de détection passive de cible comprenant un détecteur infrarouge fixé à l'engin, tel qu'avion, et inspectant cycliquement par balayage électronique un champ de vision. A chaque cycle, toutes les t secondes, des cibles sont détectées en comparant les pics du signal sortant du détecteur, c'est-à-dire les intensités de rayonnement des cibles et les dimensions des tâches-images des cibles par rapport à des seuils prédéterminés. Des moyens inclus dans l'engin déterminent l'azimut et le site de chaque cible par rapport à l'axe optique du détecteur fixe, c'est-à-dire par rapport à un repère lié à l'engin. Sachant que l'irradiation d'une cible reçue par le détecteur, c'est-à-dire l'intensité apparente de la cible, est proportionnelle à l'intensité réelle de la cible et inversement proportionnelle au carré de la distance de l'engin séparant la cible, un calculateur inclus dans l'engin calcule la distance engin-cible afin d'en déduire l'intensité réelle de la cible et commander automatiquement une opération de tir lorsque cette intensité réelle est supérieure à un seuil prédéterminé, c'est-à-dire lorsque la cible est reconnue comme cible à détruire.

Le calcul de la distance engin-cible D s'effectue en fonction de la vitesse constante de l'engin par rapport au sol et deux angles de gisement $\alpha_1$ et $\alpha_2$ de la direction engin-cible par rapport à la direction de déplacement de l'engin à deux instants successifs, selon la formule :

$$D = V.t.\sin \alpha_1 / [\sin (\alpha_2 - \alpha_1)]$$

Les angles de gisement sont ainsi déterminés directement en fonction des coordonnées en azimut et site de la cible selon l'image reçue par le détecteur infrarouge, c'est-à-dire par rapport au repère lié à l'engin.

Un tel procédé d'autoguidage présente les inconvénients suivants :

- la reconnaissance d'une cible s'effectue uniquement par rapport à l'énergie rayonnée par la cible, et n'est donc que très approximative puisqu'aucun critère de reconnaissance de forme n'est mis en oeuvre; la distinction entre deux cibles bien que différentes mais offrant des intensités supérieures audit seuil n'est pas atteinte;

- le détecteur infrarouge est immobile dans l'engin, et par conséquent la détection de cible est effectuée en mode "veille"; en d'autres termes, le champ de vision du détecteur doit contenir la cible visée pour que la distance de la cible soit déterminée, et par conséquent, l'engin doit être orienté d'une manière déterminée vers la cible pour que celle-ci soit en vision directe dans le détecteur; par exemple si l'engin contourne la cible, elle sera perdue du champ de vision du détecteur infrarouge.

En phase d'approche de la cible, un tel procédé ne permet donc pas de choisir un point d'impact favorable d'une cible quelle que soit la localisation du point d'impact par rapport à la direction d'arrivée de l'engin vers la cible, par exemple un point d'impact exigeant un contournement de la cible par l'engin.

La présente invention vise à pallier les inconvénients de la technique antérieure précitée, et particulièrement à guider dynamiquement un engin à détection infrarouge lorsque celui-ci est notamment en approche d'une cible, suivant une trajectoire a priori quelconque en direction d'un point d'impact prédéterminé quelconque d'une cible qui n'est pas obligatoirement en "vision directe" de l'engin.

A cette fin, le procédé selon l'invention pour autoguider vers une cible un engin parcourant initialement une trajectoire sensiblement à l'altitude de la cible, comprend :

- la détection d'une image de la cible dans une image reçue par des moyens de réception d'ondes infrarouges inclus dans l'engin et mobile dans un repère lié à l'engin, afin de repérer la cible dans ledit repère lié à l'engin, de poursuivre l'image de la cible, et de déterminer des angles de gisement de la cible et la distance séparant l'engin de la cible.

Le procédé est caractérisé
- en ce que, après la détection de l'image de la cible, ledit procédé comprend cycliquement

   * la détermination de l'attitude des moyens mobiles de réception dans le repère lié à l'engin,
   * l'orientation des moyens mobiles de réception en fonction de l'image de cible afin que l'image de cible soit contenue en permanence dans l'image reçue par les moyens de réception,
   * la détermination de l'attitude dudit repère lié à l'engin par rapport à un repère inertiel lié au centre de gravité de l'engin,
   * le calcul de l'angle de gisement de la cible dans le repère inertiel lié au centre de gravité de l'engin en fonction de l'attitude des moyens mobiles de réception et de l'attitude dudit repère lié à l'engin, et
   * le calcul de la distance séparant l'engin de la cible pour déterminer la position de la cible par rapport à l'engin, ledit calcul de distance étant effectué en fonction de deux angles de gisement calculés à deux instant successifs et de la distance parcourue par l'engin entre lesdits deux instants successifs, et étant indépendant des attitudes du repère lié à l'engin,

* le calcul de la trajectoire de l'engin en fonction dudit angle de gisement et de la dite distance.

Grâce à la mobilité des moyens de réception infrarouge par rapport à l'engin, ceux-ci sont constamment pointés vers la cible détectée, ce qui permet à l'engin de contourner la cible et de sélectionner un point d'impact favorable de la cible, sans perdre la vision de la cible. Dans ces conditions, les angles de gisement de la cible ne peuvent pas être déterminés directement par rapport à un repère lié à l'engin, comme selon la technique antérieure, puisque d'une part les moyens de réception sont mobiles par rapport à l'engin, d'autre part la cible présente un déplacement apparent par rapport à l'engin suivant les trois dimensions de l'espace, particulièrement lors de la phase d'approche. L'invention résout alors ce problème en définissant un repère de référence, appelé "repère inertiel lié au centre de gravité de l'engin", afin que la position de la cible soit connue précisément dans ce repère, c'est-à-dire afin qu'à la fois l'attitude des moyens mobiles de réception pointés vers la cible soit déterminée dans le repère lié à l'engin, et que l'attitude de ce repère lié à l'engin soit déterminée par rapport au repère de référence. Les angles de gisement de la cible fonction de ces deux attitudes peuvent être ensuite calculés.

D'autres caractéristiques du procédé selon l'invention sont énoncées dans les revendications dépendantes 2 à 4. En particulier, analogue à celui dans la EP-A-0 112 021, ce calcul dépend d'angles de gisement calculés dans le repère inertiel lié au centre de gravité, et non dans le repère lié à l'engin, la vitesse de l'engin pouvant varier d'un instant de calcul d'angle à l'instant de calcul suivant.

D'autres caractéristiques et avantages de la présente invention apparaîtront plus clairement à la lecture de la description suivante en référence aux dessins annexés correspondants dans lesquels :

- la Fig. 1 est un bloc-diagramme schématique de moyen d'autoguidage d'engin mettant en oeuvre le procédé selon l'invention;
- la Fig. 2 montre un bloc-diagramme d'une unité de reconnaissance et poursuite incluse dans une tête d'analyse de l'engin;
- la Fig. 3 montre une unité de commande de déplacement d'antenne incluse dans la tête d'analyse;
- la Fig. 4 représente un repère lié à l'engin dans lequel sont définis les angles de site et de gisement d'un axe antenne-cible;
- la Fig. 5 est un algorithme de cycle de calcul de la distance engin-cible; et
- la Fig. 6 montre géométriquement le déplacement de l'engin par rapport à la cible en vue du calcul de distance selon l'invention.

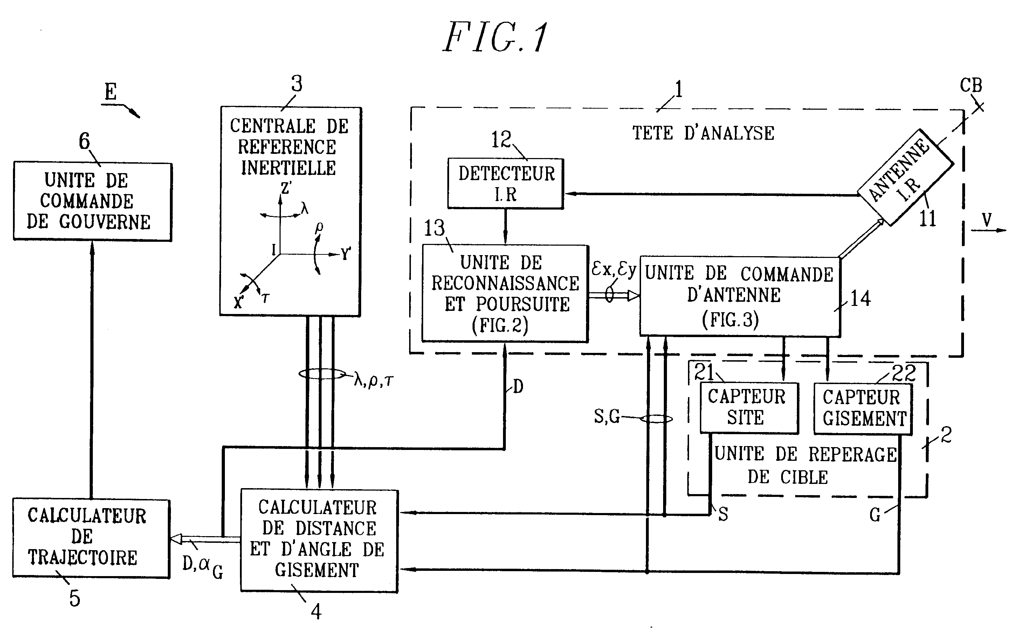

En référence à la Fig. 1, les moyens inclus dans un engin E et participant à l'autoguidage de celui-ci consistent essentiellement en une tête d'analyse 1, une unité de repérage de cible 2, une centrale de référence inertielle 3, un calculateur de distance et d'angle de gisement 4, un calculateur de trajectoire d'engin 5, et une unité de commande de gouverne d'engin 6.

La tête d'analyse 1 inclut essentiellement une antenne de détection 11 du genre système optique mobile infrarouge connu, un détecteur infrarouge 12, une unité de reconnaissance et poursuite 13, et une unité de commande de déplacement d'antenne 14.

L'antenne de détection 11 est montée sur le bâti de l'engin par l'intermédiaire d'un système à cardan par exemple. Le système à cardan autorise une mobilité spatiale de l'antenne 11 par rapport à deux directions orthogonales prédéterminées liées à l'engin, c'est-à-dire par rapport à un repère lié à l'engin, et est actionné par deux moteurs inclus dans l'unité de commande 14. Initialement, l'antenne de détection 11 balaye l'espace sous la commande de l'unité de commande 14 pour rechercher une cible CB. Cette recherche est effectuée selon un programme mémorisé dans l'unité 13 et se traduit par une mobilité de l'antenne 11 actionnée par les deux moteurs suivant un cycle prédéterminé.

Les ondes électromagnétiques infrarouges reçues par l'antenne de détection 11 sont transmises au détecteur infrarouge 12 dont le rôle est de détecter des images dans l'espace balayé et d'en extraire des éléments prédéterminés intéressants. Un tel détecteur infrarouge 12 détecte, par exemple, des objets contrastés (objets chauds ou froids), des lignes droites, et des zones à forte densité de contours à l'intérieur des objets autorisant une distinction efficace entre des objets rayonnant des énergies sensiblement égales. Les images représentant ces objets sont alors transmises à l'unité de reconnaissance et poursuite 13. Selon une réalisation préférée, le détecteur 12 comporte une mosaïque de 64 X 64 détecteurs élémentaires sensibles dans une bande de transmission atmosphérique du rayonnement infrarouge, permettant de générer en sortie du détecteur un signal d'image de la scène dans cette bande.

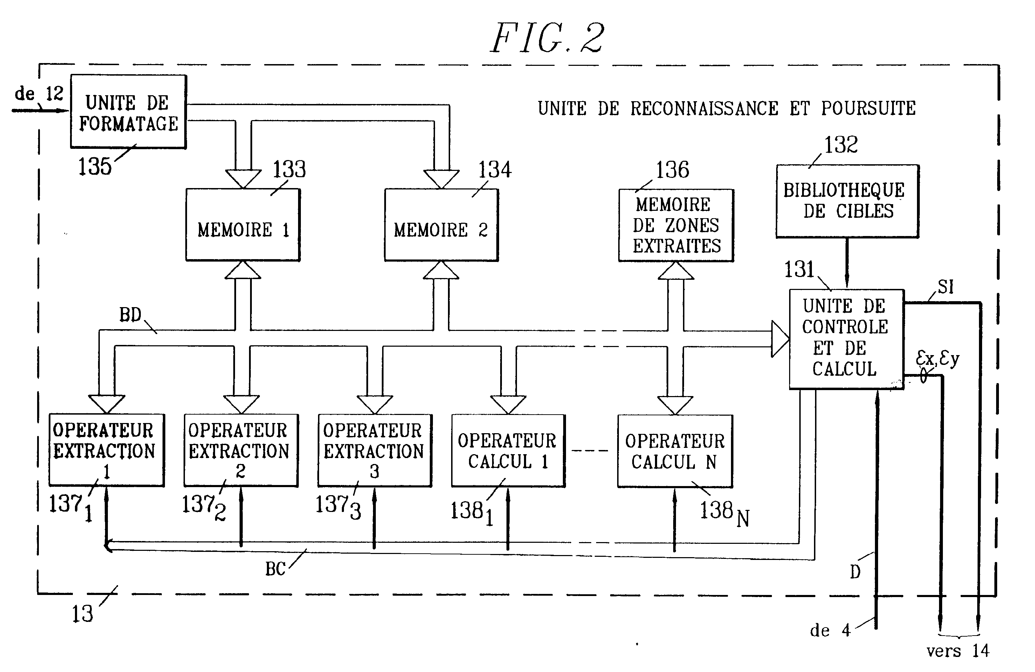

En référence à la Fig. 2, l'unité de reconnaissance et poursuite 13 comprend essentiellement une unité de contrôle et de calcul 131, une mémoire ROM de bibliothèque de cibles 132, deux mémoires RAM 133 et 134, une unité de formatage 135, une mémoire RAM de zones extraites 136, trois opérateurs d'extraction $137_1$ à $137_3$ et N opérateurs de calculs $138_1$ à $138_N$. Un bus de données BD commun relie les mémoires 133, 134 et 136, l'unité de contrôle et de calcul 131, ainsi que les différents opérateurs $137_1$ à $137_3$ et $138_1$ à $138_N$. L'unité 131 commande les différents opérateurs ou plus précisément leur actionnement en mode de traitement à travers un bus de commande BC.

Les images transmises par le détecteur infrarouge 12 sont appliquées à une entrée de l'unité de formatage 135. Cette dernière transcrit dans un format adapté lesdites images transmises afin qu'elles puissent être mémorisées puis traitées par les opérateurs $137_1$ à $137_3$ et l'unité 131 dans l'unité de reconnaissance et poursuite 13. Les images "formatées" sont alors stockées alternativement dans la mémoire 133 et dans la mémoire 134 : tandis que la mémoire 133 est en cours de chargement, des premiers traitements d'image sont réalisés par les opérateurs d'extraction $137_1$ à $137_3$ relativement au contenu de la mémoire 134, et réciproquement. Pour ces images stockées, les premiers traitements sont effectués par les opérateurs d'extraction $137_1$ à $137_3$ et consistent en une extraction dans l'image stockée de zones à plus fort éclairement. Ces zones extraites sont ensuite mémorisées dans la mémoire de zones extraites 136. Puis des seconds traitements sont réalisés par les opérateurs de calculs spécialisés $138_1$ à $138_N$ précisément sur les zones extraites mémorisées dans la mémoire 136. Ces opérateurs spécialisés effectuent chacun des calculs spécifiques respectifs, tels que des calculs statistiques, géométriques et radiométriques qui globalement constituent une analyse en composantes principales.

Les résultats de ces seconds traitements en composantes principales, complétés par les informations de distance D et d'angle de gisement $\alpha_G$ calculés par le calculateur 4, comme on le verra ultérieurement, permettent de déduire des paramètres de forme et des caractéristiques de la cible présumée, tels que longueur, hauteur, angle de présentation radiométrie, nombre de cheminées pour un navire, etc... et de les comparer à des caractéristiques de cibles préenregistrées dans la mémoire de bibliothèque de cibles 132. Les caractéristiques préenregistrées de cibles ont été obtenues par des techniques d'imagerie infrarouge. La comparaison précitée indique si la cible présumée s'identifie particulièrement à une cible préenregistrée. En cas d'identification, la cible est reconnue et l'unité de commande de gouverne 6 est activée afin d'atteindre la cible CB. Dans le cas contraire, une analyse d'image se poursuit jusqu'à reconnaître une autre cible présumée intéressante.

Dans le cas d'une comparaison positive, la position dans l'image de la zone reconnue comme cible est transmise à l'unité de contrôle et de calcul 131 ayant alors un rôle d'unité de poursuite en appliquant un signal d'indication de reconnaissance SI et des signaux de commandes appropriés εx et εy à l'unité de commande 14 de manière à modifier l'orientation de l'antenne 11 vers la zone géographique correspondant à la zone d'extraction et plus précisément à maintenir la zone d'extraction au centre de l'image infrarouge détectée.

Ainsi opérationnellement, l'unité de reconnaissance et poursuite 13 effectue en permanence une comparaison entre les images reçues et des caractéristiques préenregistrées de l'image d'une cible donnée CB. Les caractéristiques sont notamment les dimensions, contour et forme de la cible, et la direction et la distance estimées de la cible. Après reconnaissance des caractéristiques de la cible CB selon des critères connus en imagerie infrarouge, l'unité de reconnaissance 13 détermine les positions εx, εy de la cible CB dans l'image reçue et les applique à l'unité de commande 14.

L'unité de reconnaissance et poursuite 13 repère à chaque instant la position d'un objet dans l'image reçue, où l'objet représente les caractéristiques préenregistrées de la cible.

Cette unité de reconnaissance et poursuite 13 localise ainsi la cible CB pour une position donnée de l'antenne 11. Un "glissement" de l'objet dans l'image est détecté par l'unité de reconnaissance et poursuite 13 qui "poursuit" l'objet dans l'image. L'unité 13 établit des signaux électriques de déplacement d'objet εx, εy qui sont appliqués à l'unité de commande 14 pour repositionner l'antenne 11 afin que l'antenne soit pointée vers la cible-objet et l'objet possède sensiblement en permanence la même position dans l'image.

Les signaux électriques appliqués à l'unité de commande 14 sont destinés à repositionner l'antenne 11 en terme de site S et de gisement G pour asservir la position de l'antenne 11 à la cible CB. A ce stade, la tête d'analyse 1 est "accrochée" sur la cible CB et, l'unité de repérage 2 établit en permanence la direction de la cible CB par rapport à l'orientation de l'engin, c'est-à-dire la direction engin-cible par rapport au repère lié à l'engin.

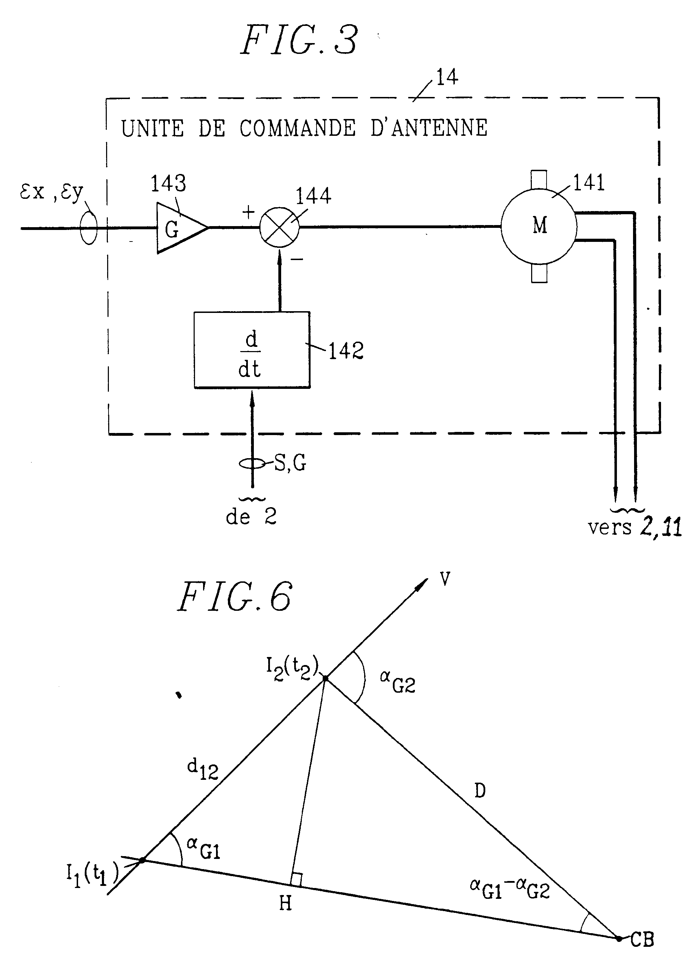

En référence à la Fig. 3, l'unité de commande de déplacement 14 est sous la forme d'une boucle d'asservissement de type connu pour asservir convenablement et de manière stable l'antenne à la position εx, εy souhaitée. La boucle d'asservissement comprend une unité à deux moteurs 141 pour orienter l'antenne 11, un dérivateur 142, un amplificateur de gain 143, et un comparateur 144. Les signaux électriques des mesures instantanées de site S et de gisement G établis par l'unité de repérage de cible 2 sont comparées avec les signaux de déplacement d'objet εx, εy afin d'asservir la position de l'antenne 11 à la cible CB.

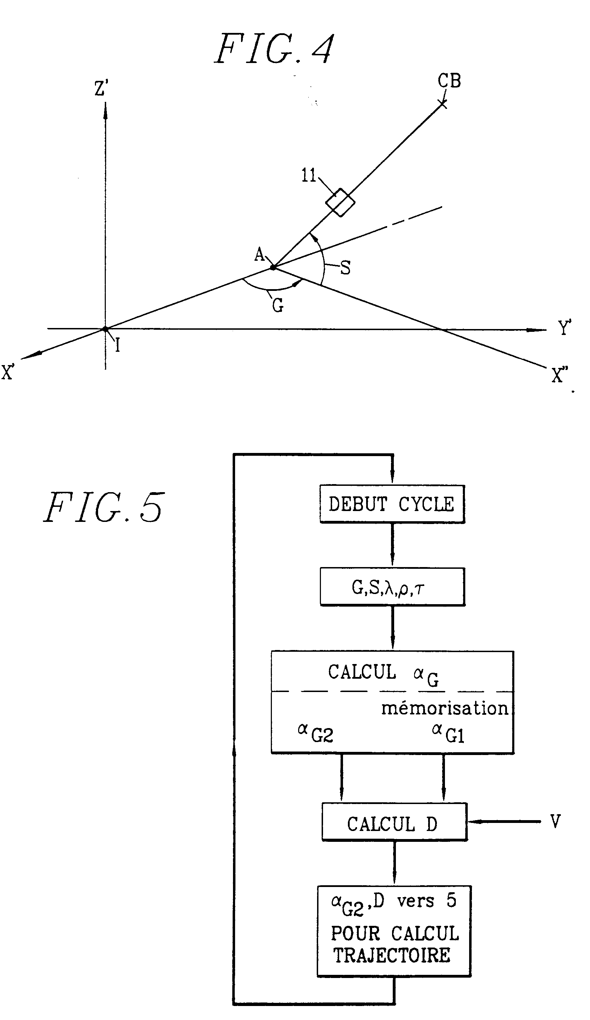

L'unité de repérage 2 comprend notamment deux capteurs 21 et 22 reliés au dérivateur 142 et à l'unité 141, dans l'unité de commande 14 pour capter la position de l'antenne 11. L'un 21 des capteurs produit un signal électrique représentatif du site S de la direction engin-cible E - CB correspondant à la direction de l'antenne 11 par rapport à un repère cartésien prédéterminé IX'Y'Z' d'axes IX', IY' et IZ' lié à l'engin E et montré à la Fig. 4. L'un IX' des axes du repère IX'Y'Z' est l'axe longitudinal de l'engin par exemple. L'autre capteur 22 produit un autre signal électrique représentatif du gisement G de la direction engin-cible E - CB par rapport au repère lié à l'engin. Ces deux signaux sont traités dans l'unité de repérage afin de les transmettre en parallèle et sous forme numérique au calculateur 4, ainsi qu'à l'asservissement dans l'unité 14 pour "stabiliser" pendant de brèves périodes l'antenne 11.

Une centrale de référence inertielle 3 est analogue à un dispositif à gyromètres classiques. Elle détermine l'attitude du repère prédéterminé IX'Y'Z' lié à l'engin par rapport à un repère fixe galiléen de référence IXYZ lié au centre de gravité I (ou d'inertie) de l'engin. Par exemple, deux des trois axes IX, IY et IZ sont un axe vertical, et un axe dirigé vers un pôle magnétique, ou vers le soleil. L'attitude du repère IX'Y'Z' est traduite par trois coordonnées angulaires $\lambda$, $\rho$, $\tau$. Ces coordonnées angulaires sont transmises en parallèle et sous forme de signaux numériques par la centrale inertielle 3 au calculateur 4.

Le calculateur 4 calcule cycliquement la distance D entre l'engin E et la cible CB et l'angle de gisement $\alpha_G$ de la direction engin-cible E - CB dans le repère de référence IXYZ, en fonction des variables $\lambda$, $\rho$, $\tau$, S et G. Le second calculateur 5 détermine la trajectoire finale de l'engin E en fonction des variables D et $\alpha_G$ afin de transmettre des instructions de guidage d'engin à l'unité de commande de gouverne 6. L'unité 6 oriente, en conséquence, l'engin suivant la trajectoire calculée vers la cible.

Les calculateurs 4 et 5 sont de préférence conçus sous forme de microprocesseurs. Les différentes phases de calcul entrant dans le procédé d'autoguidage selon l'invention sont décrites ci-après.

En référence à la Fig. 4, le repérage de l'attitude de l'antenne 11 réalisé par les deux capteurs de position 21 et 22 de l'unité de repérage 2 lorsque la tête d'analyse 1 est "accrochée" sur la cible, permet de connaître l'angle de site S et l'angle de gisement G de l'attitude de l'antenne 11 dans le repère cartésien IX'Y'Z' lié à l'engin E et mobile par rapport au repère de référence IXYZ. Pour une attitude quelconque de l'antenne 11, les angles S et G sont définis par rapport à l'axe (A, CB) d'orientation de l'antenne 11 et à la projection AX" de cet axe sur le plan IX'Y' dans le repère mobile IX'Y'Z'. A désigne un point fixe dans le bâti de l'engin où les axes de rotation de l'antenne 11 dans le système à cardan concourent, et est situé dans le plan IX'Y'. L'angle de site S indiqué par le capteur 21 est l'angle orienté entre les axes orientés AX" et (A, CB). L'angle de gisement G indiqué par le capteur 22 est l'angle orienté entre les axes orientés IX' et AX". De préférence, le point A peut être situé sur l'axe IX', comme montré à la Fig.4.

Le positionnement de l'antenne 11 est effectué comme décrit précédemment par les deux moteurs agissant sur le système à cardan, l'antenne 11 étant solidaire de l'extrémité d'un arbre de support d'un tel système. L'unité de commande 14 commande alors les deux moteurs qui positionnent l'antenne 11 dans une direction telle que la cible CB soit axée en permanence dans l'angle solide vu par l'antenne 11.

Les deux capteurs de position 21 et 22 établissent cycliquement l'attitude de l'antenne 11 dans le repère IX'Y'Z' mobile et lié à l'engin E sous la forme des deux signaux électriques transmis au calculateur 4, et représentatifs de l'angle de gisement G et de l'angle de site S.

Le dispositif à gyromètres, inclus dans la centrale de référence inertielle 3, détermine cycliquement l'attitude du repère mobile IX'Y'Z' par rapport au repère de référence IXYZ lié au centre de gravité de l'engin. Les gyromètres sont fréquemment utilisés en navigation aérienne pour indiquer des changements de direction.

La centrale de référence inertielle 3 comprend trois gyromètres disposés selon les trois axes IX', IY' et I'Z' du repère mobile IX'Y'Z' et passant par le point I qui est le centre de gravité de l'engin E. Grâce à la conjugaison des mesures dans les trois gyromètres, la centrale 3 évalue cycliquement l'attitude de l'engin par rapport à la terre en fonction de l'angle de lacet $\lambda$, l'angle de roulis $\rho$ et l'angle de tangage $\tau$ de l'engin E par rapport au repère inertiel de référence IXYZ sous la forme de trois signaux électriques respectifs représentatifs de ces trois angles et appliqués au calculateur 4. Il est à noter que les trois angles $\lambda$, $\rho$, $\tau$ définissent complètement l'attitude de l'engin E par rapport au repère inertiel de référence IXYZ.

Les deux signaux électriques analogiques établis par l'unité de repérage 2 ainsi que les trois signaux électriques analogiques établis par la centrale de référence inertielle 3, sont numérisés cycliquement en parallèle par des convertisseurs analogiques-numériques pour être utilisés par le calculateur 4. La période d'échantillonnage dans les convertisseurs définit un cycle de calcul dans le calculateur 4. Au cours d'un cycle montré à la Fig. 5, les valeurs numériques des angles G, S, $\lambda$, $\rho$, $\tau$ sont traitées par le calculateur 4 qui calcule l'angle de gisement $\alpha_G$ de l'antenne 11 dans le repère inertiel IXYZ lié au centre de gravité de l'engin ainsi que la distance D séparant la cible CB de l'engin E.

L'angle de gisement $\alpha_G$ de l'antenne 11 par rapport au repère inertiel est l'angle entre la projection de l'axe (A, CB) de l'antenne 11 sur le plan IXY, et l'axe IX. Cette projection est désignée par $(I_1, CB)$ et $(I_2, CB)$ à deux instants successifs $t_1$ et $t_2$ dans la Fig. 6, respectivement.

En pratique, le plan IXY peut être confondu avec le sol. Le centre d'inertie I de l'engin E se déplace à une vitesse sensiblement rectiligne entre deux instants successifs de mesure et à une altitude constante entre deux instants successifs de mesure. Sachant que la vitesse sensiblement rectiligne de l'engin E est très grande par rapport à celle de la cible, et l'altitude de l'engin est très petite par rapport à la distance engin-cible, la trajectoire de l'engin est supposée inscrite dans le plan de sol IXY contenant la cible et confondue avec l'axe de référence rectiligne IX entre deux mesures d'angle $\alpha_G$ comme montré à la Fig. 6.

La seule valeur de l'angle de gisement $\alpha_G$ par rapport au repère fixe IXYZ représente précisément le positionnement angulaire de la cible CB par rapport à l'engin E. En effet, connaissant l'attitude du repère IX'Y'Z' lié à l'engin E par rapport au repère inertiel IXYZ lié au centre de gravité par utilisation du dispositif à gyromètres inclus dans la centrale de référence inertielle 3, et connaissant l'attitude de l'antenne 11 dans le repère mobile IX'Y'Z' lié à l'engin, l'attitude de l'antenne 11 dans le repère inertiel IXYZ est calculée en terme d'angle de gisement $\alpha_G$ dans le repère inertiel IXYZ dans le calculateur 4.

En référence à la Fig. 5, les différentes fonctions effectuées par le calculateur 4 sont schématisées sous forme d'un algorithme cyclique comprenant quatre phases. Comme vu précédemment, le calculateur 4 reçoit cycliquement sous forme numérique les valeurs représentatives des angles G, S, $\lambda$, $\rho$, $\tau$.

Initialement, au début d'un cycle, le calculateur 4 reçoit les cinq angles G, S, $\lambda$, $\rho$, $\tau$ et les mémorise.

Le calculateur 4 effectue ensuite le calcul de l'angle de gisement $\alpha_G$ de l'antenne 11, compte tenu des cinq angles G, S, $\lambda$, $\rho$, $\tau$ dans le repère inertiel de référence IXYZ, puis stocke cette valeur calculée. L'angle de gisement $\alpha_G$ peut être calculé selon la formule suivante :

$$\alpha_G = (G + \lambda) \cos\rho + (S + \tau) \sin\rho .$$

Ensuite, le calculateur 4 utilise les deux dernières valeurs calculées $\alpha_{G1}$ et $\alpha_{G2}$ de l'angle de gisement pour déterminer la distance D séparant la cible CB de l'engin E comme décrit ultérieurement en référence à la Fig. 6.

Le calculateur 4 transmet ensuite la dernière valeur calculée $\alpha_{G2}$ de l'angle de gisement de l'antenne 11 dans le repère inertiel IXYZ ainsi que la distance D séparant la cible CI de l'engin E au calculateur 5, sous forme de signaux numériques. En fin de cycle, le calculateur 5 détermine la trajectoire finale de l'engin E en vue de diriger l'engin E vers la cible au moyen de l'unité de commande de gouverne 6.

En référence à la Fig. 6, le calcul de la distance D séparant l'engin E de la cible CB réalisé au cours d'un cycle par le calculateur 4 succède à deux calculs successifs de l'angle de gisement $\alpha_G$ dans le repère inertiel respectivement à deux instants de cycle $t_1$ et $t_2$ correspondant à une première valeur d'angle $\alpha_{G1}$ mémorisée, et à une seconde valeur d'angle $\alpha_{G2}$ calculée au cours dudit cycle. Les deux instants successifs $t_1$ et $t_2$ correspondent respectivement à deux positions $I_1$ et $I_2$ du centre de gravité I dans le plan IXY, ici supposé confondu avec le point A.

Connaissant la vitesse V(t) du centre de gravité I de l'engin, qui a priori varie en fonction du temps t selon une loi prédéterminée mémorisée, la distance $d_{12}$ parcourue par l'engin E entre les deux instants de cycle $t_1$ et $t_2$ est :

$$d_{12} = V(t_2).t_2 - V(t_1).t_1 .$$

Lorsque l'engin est en régime stable, la vitesse V est constante, et par suite la distance est :

$$d_{12} = V (t_2 - t_1) .$$

Si $I_2H$ est la hauteur issue du sommet $I_2$ dans le triangle $I_1$ $I_2$ CB, celle-ci s'exprime par les deux relations suivantes :

$$I_2H = d_{12} \sin \alpha_{G1}, \text{ et}$$
$$I_2H = D \sin(\alpha_{G2} - \alpha_{G1}) .$$

De ces deux relations est déduite la distance engin-cible D :

$$D = d_{12} . \sin \alpha_{G1} / [\sin(\alpha_{G2} - \alpha_{G1})] .$$

Pour le calculateur 4, les étapes successives du calcul de la distance D séparant l'engin E de la cible sont :

- le calcul et la mémorisation d'un premier angle de gisement $\alpha_{G1}$ et d'un second angle de gisement $\alpha_{G2}$ à deux instants successifs $t_1$ et $t_2$ respectivement, en fonction des attitudes respectives de l'antenne 11 et du repère lié à l'engin IX'Y'Z',
- le calcul de la distance $d_{12}$ parcourue entre ces deux instants compte tenu des vitesses $V(t_1)$ et $V(t_2)$ de l'engin E, et
- le calcul de la distance D séparant l'engin E de la cible CB en fonction des variables lues $\alpha_{G1}$, $\alpha_{G2}$ et $d_{12}$ selon la relation ci-dessus, après l'instant $t_2$.

Le calculateur de trajectoire 5 reçoit les valeurs mesurées de l'angle de gisement $\alpha_G$ et de la distance D, sous forme numérique, et mémorise une fonction numérisée de la vitesse V de l'engin E en fonction du temps, pour déterminer la trajectoire finale de l'engin E en vue d'atteindre la cible CB.

Des caractéristiques prédéterminées relatives à des trajectoires préférentielles de l'engin pour des points d'impact prédéterminés de la cible CB sont mémorisées dans le calculateur 5 pour des couples dépendant de la distance calculée D séparant la cible CB de l'engin E et de l'angle de gisement calculé $\alpha_G$ dans le repère fixe OXYZ. Le calculateur 5 sélectionne en conséquence la trajectoire optimale finale de l'engin E en fonction du point d'impact choisi. Le changement de trajectoire de l'engin E en vue d'atteindre la cible CB ne peut être autorisé que pour un angle de gisement $\alpha_G$ donné ou pour une distance D séparant l'engin de la cible prédéterminée.

Dans ces conditions, au lieu que l'engin se dirige directement sur la cible, l'engin peut être autodirigé vers un point d'impact prédéterminé sensible ou mal défendu de la cible CB, en contournant la cible.

**Revendications**

1. Procédé pour autoguider vers une cible (CB) un engin (E) parcourant initialement une trajectoire ($I_1 I_2$) sensiblement à l'altitude de la cible (CB), ledit procédé comprenant :

- la détection d'une image de la cible dans une image reçue par des moyens de réception d'ondes infrarouges (11, 12) inclus dans l'engin et mobile dans un repère lié à l'engin (IX'Z'Y'), afin de repérer la cible dans ledit repère (IX'Y'Z') lié à l'engin (E), de poursuivre l'image de la cible, et de déterminer des angles de gisement de la cible ($\alpha_G$) et la distance (D) séparant l'engin de la cible, caractérisé

- en ce que, après la détection de l'image de la cible (CB), ledit procédé comprend cycliquement
  * la détermination de l'attitude (S, G) des moyens mobiles de réception (11, 12) dans le repère lié à l'engin (IX'Y'Z'),
  * l'orientation des moyens mobiles de réception (11) en fonction de l'image de cible afin que l'image de cible soit contenue en permanence dans l'image reçue par les moyens de réception,
  * la détermination de l'attitude ($\lambda$, $\rho$, $\tau$) dudit repère lié à l'engin (IX'Y'Z') par rapport à un repère inertiel (IX, Y, Z) lié au centre de gravité (I) de l'engin (E),
  * le calcul de l'angle de gisement ($\alpha_G$) de la cible dans le repère inertiel lié au centre de gravité de l'engin en fonction de l'attitude (S, G) des moyens mobiles de réception et de l'attitude ($\lambda$, $\rho$, $\tau$) dudit repère lié à l'engin, et
  * le calcul de la distance (D) séparant l'engin de la cible pour déterminer la position de la cible par rapport à l'engin, ledit calcul de distance étant effectué en fonction de deux angles de gisement ($\alpha_{G1}$, $\alpha_{G2}$) calculés à deux instants successifs ($t_1$, $t_2$) et de la distance ($d_{12}$) parcourue par l'engin (E) entre lesdits deux instants successifs ($t_1$, $t_2$), et étant indépendant des attitudes du repère lié à l'engin (IX'Y'Z'),
  * le calcul de la trajectoire de l'engin en fonction dudit angle de gisement et de la dite distance.

2. Procédé conforme à la revendication 1, caractérisé en ce que l'angle de gisement ($\alpha_G$) est calculé en fonction du site (S) et du gisement (G) définissant l'attitude des moyens mobiles de réception (11) en poursuite de l'image de la cible (CB) par rapport audit repère lié à l'engin (IX'Y'Z'), et en fonction de l'angle de lacet ($\lambda$), de l'angle de roulis ($\rho$) et de l'angle de tangage ($\tau$) définissant l'attitude du repère lié à l'engin (IX'Y'Z') par rapport audit repère inertiel lié au centre de gravité de l'engin (IXYZ).

3. Procédé conforme à la revendication 1 ou 2, caractérisé en ce que ladite distance D séparant l'engin de la cible est calculée selon la relation suivante :

$$D = [V(t_2).t_2 - V(t_1).t_1] . \sin \alpha_{G1} / (\sin (\alpha_{G2} - \alpha_{G1}))$$

où $V(t_1)$ et $V(t_2)$ sont les vitesses de l'engin à deux instants successifs $t_1$ et $t_2$ auxquels sont calculés les deux angles de gisement $\alpha_{G1}$ et $\alpha_{G2}$ de l'engin dans le repère inertiel lié au centre de gravité (IXYZ), les angles de gisement $\alpha_{G1}$ et $\alpha_{G2}$ étant mémorisés aux instants $t_1$ et $t_2$ et étant lus après l'instant de cycle $t_2$.

4. Procédé conforme à l'une quelconque des revendications 1 à 3, caractérisé en ce que le cycle comprend, après le calcul de l'angle de gisement ($\alpha_G$) et de la distance (D), le calcul d'une trajectoire de l'engin en fonction de l'angle de gisement et de la distance ainsi qu'en fonction de caractéristiques prédéterminées de la cible, telles que point d'impact de la cible.

## Patentansprüche

1. Verfahren zur Selbstlenkung eines Flugkörpers (E) gegen ein Ziel (CB), der anfangs eine Bahn ($I_1 I_2$) ungefähr in der Höhe des Ziels (CB) zurücklegt, enthaltend:

- die Erfassung eines Bildes des Ziels in einem von Empfangsmitteln für infrarote Wellen (11, 12) empfangenen Bild, welche Mittel im Flugkörper eingeschlossen sind und innerhalb einer mit dem Flugkörper verbundenen Marke (IX'Z'Y') beweglich sind, damit ein Ziel in der besagten mit dem Flugkörper (E) verbundenen Marke (IX'Y'Z') erfaßt wird, das Bild des Ziels verfolgt wird und die Peilwinkel des Ziels ($\alpha_G$) und der Abstand (D) zwischen dem Flugkörper und dem Ziel festgelegt werden,

dadurch gekennzeichnet,

- daß besagtes Verfahren nach Erfassung des Bildes des Ziels (CB) zyklisch wie folgt umfaßt:
  * die Bestimmung des Verhaltens (S, G) der beweglichen Empfangsmittel (11, 12) in der mit dem Flugkörper verbundenen Marke (IX'Y'Z'),
  * die Orientierung der beweglichen Empfangsmittel (11) in Abhängigkeit von dem Bild des Ziels, damit das Bild des Ziels stets in dem von den Empfangsmitteln empfangenen Bild eingeschlossen wird,
  * die Bestimmung des Verhaltens ($\lambda$, $\rho$, $\tau$) der besagten mit dem Flugkörper verbundenen Marke (IX'Y'Z') im Verhältnis zu einer mit dem Schwerpunkt (I) des Flugkörpers (E) verbundenen Trägheitsmarke (IX, Y, Z)

* die Berechnung des Feilwinkels ($\alpha_G$) des Ziels in der mit dem Schwerpunkt des Flugkörpers verbundenen Trägheitsmarke in Abhängigkeit von dem Verhalten (S, G) der beweglichen Empfangsmittel und von dem Verhalten ($\lambda$, $\rho$, $\tau$) der besagten mit dem Flugkörper verbundenen Marke, und
* die Berechnung des Abstands (D) zwischen dem Flugkörper und dem Ziel, um die Position des Ziels im Verhältnis zu dem Flugkörper festzulegen, wobei besagte Abstandsberechnung in Abhängigkeit von den zwei Peilwinkeln ($\alpha_{G1}$, $\alpha_{G2}$), die an zwei aufeinanderfolgenden Momenten ($t_1$, $t_2$) berechnet werden, und von der vom Flugkörper (E) zwischen den besagten zwei aufeinanderfolgenden Momenten ($t_1$, $t_2$) zurückgelegten Strecke ($d_{12}$) durchgeführt wird, unabhängig von dem Verhalten der mit dem Flugkörper verbundenen Marke (IX'Y'Z'),
* die Berechnung der Bahn des Flugkörpers in Abhängigkeit von dem besagten peilwinkel und von dem besagten Abstand.

2. Verfahren nach Anspruch 1, dadurch gekennzeichnet, daß der Peilwinkel ($\alpha_G$) in Abhängigkeit vom Standort (S) und von der Peilung (G) berechnet wird, welche das Verhalten der bewegliche Empfangsmittel (11) definieren bei der Verfolgung des Bildes des Ziels (CB) im Verhältnis zu der mit dem Flugkörper verbundenen Marke (IX'Y'Z') und in Abhängigkeit von dem Gierwinkel ($\lambda$), dem Rollwinkel ($\rho$) und dem Nickwinkel ($\tau$), welche das Verhalten der mit dem Flugkörper verbundenen Marke (IX'Y'Z') im Verhältnis zu der besagten mit dem Schwerpunkt des Flugkörpers (IXYZ) verbundenen Trägheitsmarke definieren.

3. Verfahren nach Anspruch 1 oder 2, dadurch gekennzeichnet, daß besagter Abstand D zwischen Flugkörper und Ziel gemäß folgender Gleichung berechnet wird:
$$D = [V(t_2) \cdot t_2 - V(t_1) \cdot t_1] \cdot \sin \alpha_{G1} / (\sin (\alpha_{G2} - \alpha_{G1})),$$
in welcher $V(t_1)$ und $V(t_2)$ die Geschwindigkeiten des Flugkörpers an zwei aufeinanderfolgenden Momenten $t_1$ und $t_2$, an welchen die zwei Peilwinkel $\alpha_{G1}$ und $\alpha_{G2}$ des Flugkörpers in der mit dem Schwerpunkt (IXYZ) verbundenen Trägheitsmarke berechnet werden, wobei die Peilwinkel $\alpha_{G1}$ und $\alpha_{G2}$ an den Momenten $t_1$ und $t_2$ gespeichert werden und nach dem Zyklusmoment $t_2$ gelesen werden.

4. Verfahren nach irgendeinem der Ansprüche 1 bis 3, dadurch gekennzeichnet, daß der Zyklus, nach der Berechnung des Peilwinkels ($\alpha_G$) und des Abstands (D), die Berechnung einer Flugkörperbahn in Abhängigkeit von dem Peilwinkel und von dem Abstand sowie von vorgegebenen Merkmalen des Ziels, wie dem Auftreffpunkt des Ziels, umfaßt.

## Claims

1. A procedure for automatically guiding towards a target (CB) a missile (E) moving initially on a trajectory ($I_1$, $I_2$) substantially at target height, the procedure comprising:

   the detection of a target image in an image received by infrared reception means (11, 12) which are incorporated in the missile and are movable in the missile-linked locating system (IX'Z'Y') in order to locate the target therein, pursue the target image and determine the target bearing angles ($\alpha_G$) and the missile-to-target distance (D).
   characterised in that
   after detection of the target image the procedure comprises cyclically:
   determining the attitude (S, G) of the mobile reception means (11, 12) in the missile-linked locating system (IX'Y'Z');
   orienting the mobile reception means (11) in dependence upon the target image in order to contain the same permanently in the image received by the reception means;
   determining the attitude ($\lambda$, $\rho$, $\tau$) of the missile-linked locating system (IX'Y'Z') relatively to an inertial locating system (IX, Y, Z) associated with the centre of gravity (I) of the missile (E);
   calculating the target bearing angle ($\alpha_G$) in the inertial reference locating system in dependence upon the attitude (S, G) of the mobile reception means and the attitude ($\lambda$, $\rho$, $\tau$) of the missile-linked locatingsystem;
   calculating the missile-to-target distance (D) to determine target position relatively to the missile, such distance calculation being effected in dependence upon two bearing angles ($\alpha_{G1}$, $\alpha_{G2}$) calculated at two successive instants of time ($t_1$, $t_2$) and upon the distance ($d_{12}$) travelled by the missile (E) between the said two consecutive instants of time, the calculation being independent of the attitudes of the missile-linked locating system (IX'Y'Z'), and
   calculating the missile trajectory in dependence upon said bearing angle and said distance.

2. A procedure according to claim 1, characterised in that the bearing angle ($\alpha_G$) is calculated in dependence upon the elevation (S) and bearing (G) defining the attitude of the mobile reception means (11) in pursuit of the target image relatively to the missile-linked locating system (IX′Y′Z′) and in dependence upon the yaw angle ($\lambda$), the roll angle ($\rho$) and pitch angle ($\tau$) defining the attitude of the missile-linked locating system (IX′Y′Z′) relatively to the inertial locating system (IXYZ).

3. A procedure according to claim 1 or 2, characterised in that the missile-to-target distance D is calculated by the following formula:

$$D = [V(t_2).t_2 - V(t_1).t_1] . \sin \alpha_{G1} / (\sin (\alpha_{G2} - \alpha_{G1}))$$

wherein $V(t_1)$ and $V(t_2)$ are missile speeds at two consecutive instants of time $t_1$ and $t_2$ at which the two missile bearing angles $\alpha_{G1}$ and $\alpha_{G2}$ are calculated in the inertial locating system (IXYZ), the bearing angles $\alpha_{G1}$ and $\alpha_{G2}$ being stored at the instants $t_1$ and $t_2$ and being read after the instant $t_2$.

4. A procedure according to any of claims 1 to 3, characterised in that the cycle comprises, after calculation of the bearing angle ($\alpha_G$) and distance (D), calculation of a missile trajectory in dependence upon the bearing angle, the distance and predetermined target characteristics such as target impact point.

*FIG.1*

FIG.2

EP 0 508 905 B1

## FIG.3

UNITE DE COMMANDE D'ANTENNE

$\varepsilon x, \varepsilon y$

143

G

144

+

$-$

141

M

$\dfrac{d}{dt}$

142

S,G

de 2

vers 2,11

## FIG.6

V

$I_2(t_2)$

$\alpha_{G2}$

$d_{12}$

D

$\alpha_{G1}$

$I_1(t_1)$

H

$\alpha_{G1} - \alpha_{G2}$

CB

# FIG. 4

# FIG. 5

13